Europäisches Patentamt

European Patent Office

Office européen des brevets

(11) Numéro de publication: **0 398 771**

**A1**

(12) **DEMANDE DE BREVET EUROPEEN**

(21) Numéro de dépôt: 90400979.2

(22) Date de dépôt: **10.04.90**

(51) Int. Cl.⁵: **G01D 21/02, B07C 5/34**

(30) Priorité: **17.04.89 FR 8905056**

(43) Date de publication de la demande:
**22.11.90 Bulletin 90/47**

(84) Etats contractants désignés:
**BE DE ES GB GR IT NL**

(71) Demandeur: **Brasseries KRONENBOURG Société dite : S.A.**
**68, Rte d'Oberhausbergen**
**F-67200 Strasbourg(FR)**

(72) Inventeur: **Lhomme, Christian**
**6, rue A. Daudet**
**F-67200 Oberhausbergen(FR)**

(74) Mandataire: **Orès, Bernard et al**
**Cabinet ORES 6, Avenue de Messine**
**F-75008 Paris(FR)**

(54) **Procédé et dispositif de mesure des caractéristiques de fonctionnement d'une ligne d'enfutage de bière.**

(57) Procédé et dispositif pour la détermination des caractéristiques de fonctionnement d'une ligne d'enfûtage de bière, notamment celles de remplissage des fûts, mais aussi celles comme la température, la pression, le niveau de remplissage, ... etc, des fluides mis en oeuvre en chacun des différents postes de ladite ligne au droit desquels sont amenés successivement les fûts déplacés sur la ligne.

Les caractéristiques de fonctionnement des différents postes de la ligne sont déterminées à partir de la mesure et de l'enregistrement des valeurs de certaines grandeurs régnant à l'intérieur des fûts au droit de chacun desdits postes à l'aide de capteurs et de moyens de mémoire associés à au moins un fût (20) semblable à ceux destinés à être remplis de bière et qui se déplace sur la ligne d'enfûtage en même temps que lesdits autres fûts.

FIG. 2

EP 0 398 771 A1

L'invention a pour objet un procédé et un dispositif pour la détermination des caractéristiques de fonctionnement d'une ligne ou chaîne d'enfûtage de bière, notamment celles de remplissage des fûts, mais aussi celles comme la température, la pression, le niveau de remplissage, ...etc, des fluides mis en oeuvre en chacun des différents postes de ladite ligne au droit desquels sont amenés successivement les fûts déplacés sur la ligne.

On sait que, pour sa commercialisation par soutirage à la pression, la bière est mise en fûts, dans les brasseries modernes, sur des lignes d'enfûtage automatiques où les fûts à peu près vides en retour des débits de boissons sont d'abord soumis à différentes opérations de nettoyage externe et interne, puis de stérilisation avant le remplissage et la réexpédition des fûts pleins vers les consommateurs. Le remplissage des fûts par de la bière, de même que l'introduction et/ou l'extraction dans chaque fût des fluides de nettoyage, de rinçage, de stérilisation,.....etc, a lieu par l'intermédiaire d'un plongeur traversant la bonde à ressort du fût, de sorte qu'il n'est pratiquement pas possible de vérifier, en cours d'enfûtage, les caractéristiques réelles régnant à l'intérieur des fûts, toutes les indications de fonctionnement de la ligne étant fournies par des appareils de contrôle associés aux divers postes de nettoyage, rinçage, stérilisation....etc, dont le positionnement à l'extérieur du fût, -et non pas dans celui-ci-, ne permet donc pas de connaître les valeurs des paramètres de fonctionnement dans le fût, d'une part, et peuvent parfois être erronées, d'autre part. Si l'on a déjà proposé, par exemple dans V.D.I. NACHRICHTEN Vol.30, N° 39, Octobre 76, des moyens permettant la mise en mémoire de grandeurs physiques dans des conditions difficiles d'environnement, y compris pour mesurer la température ou la pression d'une bouteille de bière en cours de pasteurisation, le problème à la base de la présente invention, et qui est celui de fournir un procédé et un dispositif permettant de déterminer les conditions réelles régnant à l'intérieur d'un fût au cours de sa progression sur une ligne d'enfûtage, aux différents postes de nettoyage, lavage, rinçage, stérilisation, ....etc, puis remplissage que comprend la ligne, n'a jamais été évoqué ni résolu.

C'est, par conséquent, un but général de l'invention d'apporter une solution à ce problème.

C'est, aussi, un but de l'invention de fournir un procédé et un dispositif adaptés aux conditions d'exploitation d'une chaîne ou ligne d'enfûtage de brasserie moderne, c'est-à-dire à débit élevé, d'une part, et à automatisation très poussée, d'autre part.

C'est, également, un but de l'invention de fournir un procédé et un dispositif qui n'introduisent pas de modification d'organisation et/ou de mode d'exploitation de la ligne d'enfûtage proprement dite et qui, de ce fait, peut être mis en oeuvre et réalisé sur les installations les plus diverses de brasseries existantes.

C'est, enfin, un but de l'invention de fournir un procédé et un dispositif propres à être mis en oeuvre et réalisés de façon simple et dont les indications et les résultats soient fiables et constants dans le temps.

Un procédé selon l'invention, pour la détermination des caractéristiques de fonctionnement d'une ligne d'enfûtage de bière, notamment celles de remplissage des fûts, mais aussi celles comme la température, la pression, le niveau de remplissage, ...etc, des fluides mis en oeuvre en chacun des différents postes de ladite ligne au droit desquels sont amenés successivement les fûts déplacés sur la ligne, est caractérisé en ce que ces caractéristiques de fonctionnement des différents postes de la ligne sont déterminées à partir de la mesure et de l'enregistrement des valeurs de certaines grandeurs régnant à l'intérieur même des fûts, au droit de chacun desdits postes et dont au moins certaines, comme la température de la paroi et celle régnant au niveau de la bonde, la pression intérieure au fût et le niveau d'un liquide à l'intérieur de celui-ci, sont mesurées et enregistrées à l'aide de capteurs et de moyens de mémoire associés à au moins un fût témoin semblable à ceux destinés à être remplis de bière et qui se déplace sur la ligne d'enfûtage en même temps que lesdits autres fûts.

Un dispositif pour la détermination des caractéristiques de fonctionnement d'une ligne d'enfûtage de bière, par mise en oeuvre du procédé, est alors caractérisé en ce qu'il comprend au moins un fût témoin identique à ceux circulant le long de la ligne pour être remplis de bière et qui est équipé de :

. capteurs de mesure de certaines grandeurs régnant à l'intérieur même du fût, comme la pression, la température de la paroi et celle au niveau de la bonde du fût, le niveau de remplissage en liquide, ...etc ;

. de moyens d'alimentation en courant électrique desdits capteurs ; et

- de moyens d'enregistrement et de mise en mémoire des valeurs des grandeurs, lesquelles sont mesurées lors du passage du fût ainsi équipé au droit des différents postes de la ligne pour ensuite être lues sur des machines simples comme des micro-ordinateurs délivrant les résultats de mesure sous forme de courbes propres à être comparées à des courbes étalons préalablement établies.

Dans une forme de réalisation préférée de l'invention, ledit fût témoin est un fût unique muni d'un capteur de pression à membrane pour la mesure de la pression régnant à l'intérieur du fût, d'un capteur de pression différentielle pour la mesure du niveau de liquide à l'intérieur du fût et d'au moins une sonde de mesure de température.

Dans cette forme de réalisation, également, l'alimentation électrique est le plus simplement fournie par des accumulateurs rechargeables, de petites dimensions, logés dans la galerie du fût qui prolonge la paroi latérale de celui-ci au niveau de la bonde.

Dans cette forme de réalisation, le fond du fût ainsi aménagé, ou fût d'essai, est en outre muni d'une trappe d'accés permettant de controler l'état de l'intérieur du fût, des capteurs et, le cas échéant, le bon fonctionnement des moyens d'acquisition et de transmission de données vers les moyens de mise en mémoire, ladite trappe étant le plus simplement ménagée par une ouverture dudit fond sur laquelle est rapportée une calotte d'un fond usuel fixée à l'aide de boulons ou de goujons.

Dans une forme d'exécution préférée le fût comprend deux sondes de mesures de température, l'une pour la mesure de la température de la paroi latérale du fût et l'autre pour la mesure de la température régnant au voisinage de la bonde, la prise de pression placée au niveau de la bonde du capteur de pression différentielle est à orientation radiale, et à l'exception des accumulateurs d'alimentation en courant électrique, l'ensemble des équipements associés aux capteurs et constitutifs des moyens d'enregistrement et de mise en mémoire sont disposés sur la paroi latérale du fût en étant isolés thermiquement de cette dernière, d'une part, et protégés à l'encontre des chocs par des cadres en tube métallique, d'autre part.

L'invention sera bien comprise par la description qui suit, faite à titre d'exemple et en référence au dessin annexé dans lequel :

- la figure 1 est une vue schématique illustrant des phases de travail en différents postes d'une ligne d'enfûtage de bière ;

- la figure 2 est une vue schématique, en perspective, d'un fût d'essai selon l'invention ;

- la figure 3 est une vue schématique d'un fût d'essai selon l'invention, partie en coupe et partie en élévation ;

- la figure 4 est une vue analogue à celle de la figure 3, mais pour un autre plan de coupe ;

- la figure 5 est une vue analogue à celle des figures 3 et 4, mais pour encore un autre plan de coupe ;

- la figure 6 est une vue de dessus du fût d'essai, selon la direction de la flèche A de la figure 5.

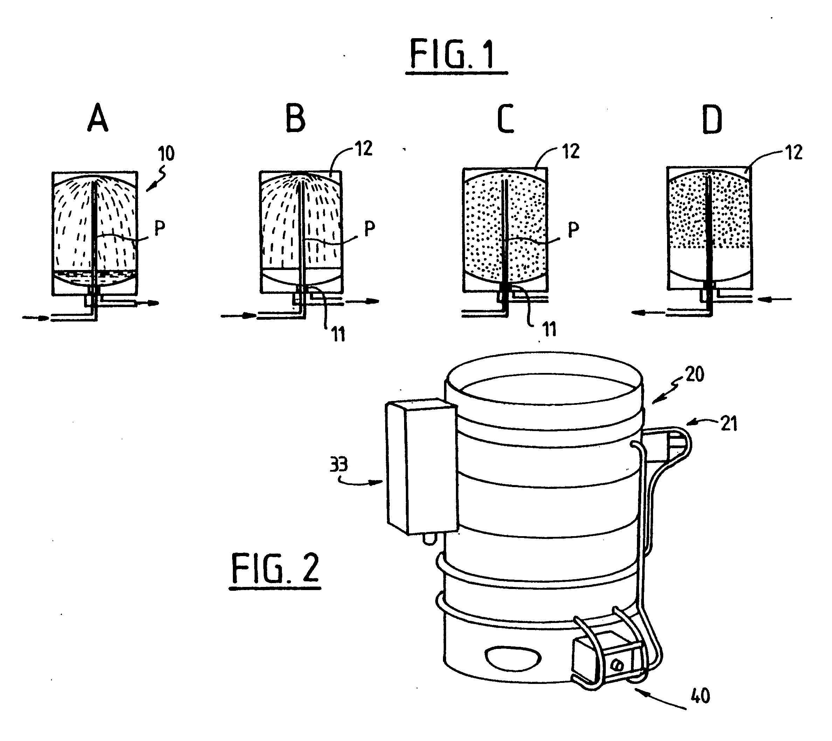

On se réfère d'abord à la figure 1 qui illustre, schématiquement, le fonctionnement d'une ligne d'enfûtage de bière d'une brasserie moderne. Les fûts 10, de retour des débits de boissons, sont d'abord soumis, à l'extrémité amont de la ligne, à un nettoyage externe puis, lors du déplacement le long de la ligne, à différentes opérations consistant successivement en une vidange des restes de bière se trouvant dans le fût, une chasse du gaz carbonique et un pré-rinçage à l'eau, ces opérations étant effectuées à l'aide d'un plongeur P qui pénétre dans la bonde à ressort, 11, du fût lequel se déplace sur la ligne d'enfûtage avec ladite bonde en partie basse et le fond 12 en partie haute. Après vidange et, par exemple, injection de liquide de lavage, comme montré en A puis rinçage comme montré en B, -opérations qui peuvent être exécutées un certain nombre de fois-, le fût 10 est soumis en C à une opération de stérilisation à l'aide de vapeur sous pression. Après purge du condensat et, le cas échéant, nouvelle stérilisation, le fût est mis sous pression de gaz carbonique puis rempli de bière en D.

Chacune de ces opérations, qui comporte l'introduction et l'extraction de fluide liquide ou gazeux dans le fût, est effectuée en suivant les spécifications pré-établies d'un procédé dont les paramètres de pression, température, débit, temps d'injection, ...etc, sont déterminés pour chaque type de fût, qu'il s'agisse d'un fût de trente ou de cinquante litres, par exemple, et des conditions d'exploitation de la ligne. A chacun des postes de travail de cette dernière, des appareils de contrôle mesurent les paramètres d'exploitation sur les canalisations appropriées et fournissent au conducteur de la ligne les indications correspondantes. Toutefois, le conducteur de ligne ne peut pas, bien entendu, constater de visu le déroulement des phases du procédé à l'intérieur même du fût, de sorte qu'en cas d'incident, ou de mesures erronées ou de fausse lecture, ...etc, un éventuel fonctionnement défectueux de la ligne n'est décelé qu'en bout de chaîne avec les conséquences fâcheuses qui en résultent.

Pour pallier de tels inconvénients, l'invention propose un procédé de détermination des caractéristiques du fonctionnement de la ligne aux différents postes de celle-ci à partir de la mesure et de l'enregistrement des valeurs de certaines grandeurs régnant à l'intérieur même des fûts au droit de chacun desdits postes.

Pour cette mesure et cet enregistrement, un fût 20, figures 2 à 6, ou fût témoin d'essai, semblable à ceux destinés à être remplis de bière, est muni de :

. capteurs de mesure de certaines grandeurs régnant à l'intérieur même du fût, comme la pression, la température de la paroi et celle au niveau de la bonde du fût, le niveau de remplissage en liquide, ...etc ;

. de moyens d'alimentation en courant électrique desdits capteurs ; et

. de moyens d'enregistrement et de mise en mémoire des valeurs des grandeurs, lesquelles sont mesurées lors du passage du fût ainsi équipé au droit des différents postes de la ligne pour ensuite être lues sur des machines simples comme des micro-ordinateurs délivrant les résultats de mesure sous forme de courbes propres à être comparées à des courbes étalons préalablement établies.

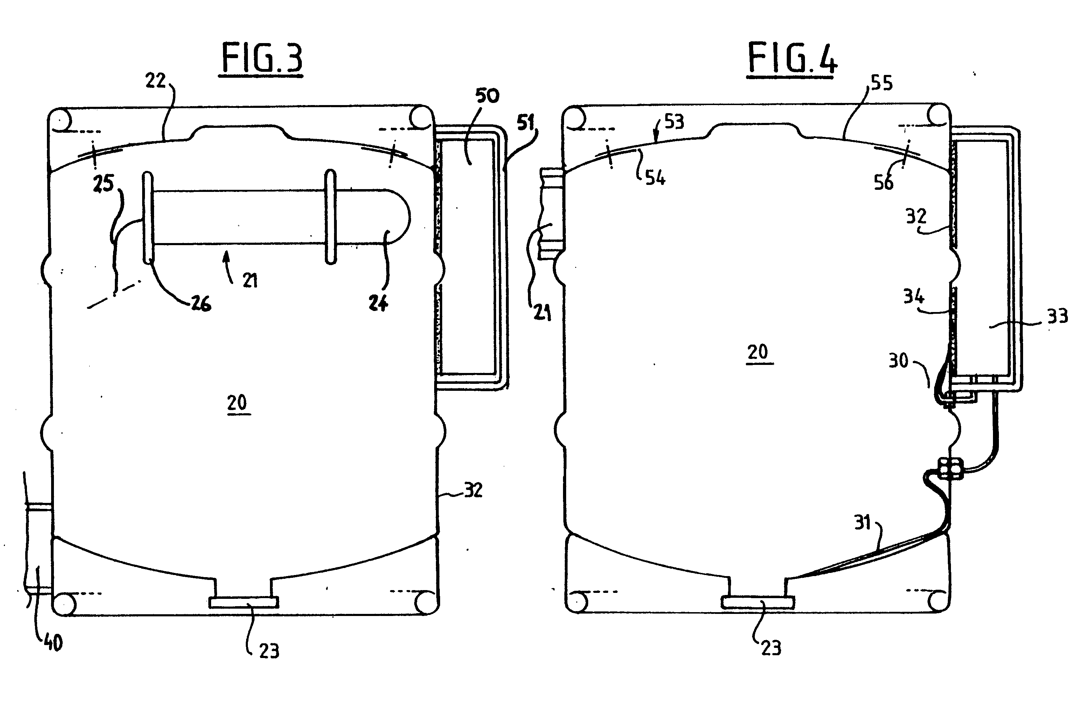

De façon plus précise, l'invention prévoit de mesurer la pression régnant à l'intérieur du fût à l'aide d'un capteur 21, figures 2 et 3, avantageusement du type à membrane, à amplificateur intégré monté sur la paroi latérale du fût et à courte distance du fond 22 montré en partie haute sur le dessin, -où le fût est représenté dans sa position de travail c'est-à-dire avec sa bonde 23 en partie basse-, près d'un convoyeur, non représenté, qui déplace les fûts sur la ligne d'enfûtage. Le raccord du capteur 21 au fût 20 est réalisé par un coude 24, les organes d'amplification, de raccordement et de connexion, -dont la sortie est montrée par le câble 25-, étant protégés à l'encontre des chocs par un cadre 26 en tuber métallique.

Pour la mesure des températures, l'invention prévoit des sondes ou thermo-couples 30 et 31 dont le premier est placé à proximité de la paroi latérale 32 du fût, à mi-hauteur de celui-ci, et dont le second a sa partie sensible à proximité de la bonde 23, l'alimentation électrique des sondes et le recueil des informations qu'elles fournissent étant effectués dans un boîtier électrique ou boîte de raccord 33 porté à distance de la paroi latérale 32 du fût par un support isolant 34. La sonde ou thermo-couple 30 fournit une indication sur la température de la paroi interne du fût, tandis que la sonde ou thermo-couple 31 permet d'obtenir des informations sur la température des différents fluides de lavage et de rinçage, au voisinage de la bonde, qui est la partie la plus délicate à stériliser, tandis qu'une comparaison des indications fournies par l'une ou l'autre sonde permet de détecter la présence de liquide résiduel dans le fût, traduisant, par exemple, un mauvais fonctionnement d'une chasse de liquide.

Pour la mesure du niveau de liquide dans le fût, celui-ci est muni d'un capteur de pression différentielle 40, figures 2, 5 et 6, lui aussi monté sur la paroi latérale 32 du fût, sensiblement au niveau de la bonde 23, avec une prise de pression 41 au voisinage du fond 22 du fût et une prise de pression positive 42 au voisinage de la bonde 23, cette dernière prise de pression étant dirigée radialement pour le pas gêner le fonctionnement de la ligne lors du passage du fût d'essai sur celle-ci. Comme pour le capteur de pression 21, le capteur de niveau 40 est protégé à l'encontre des chocs par un cadre 43 en tube métallique.

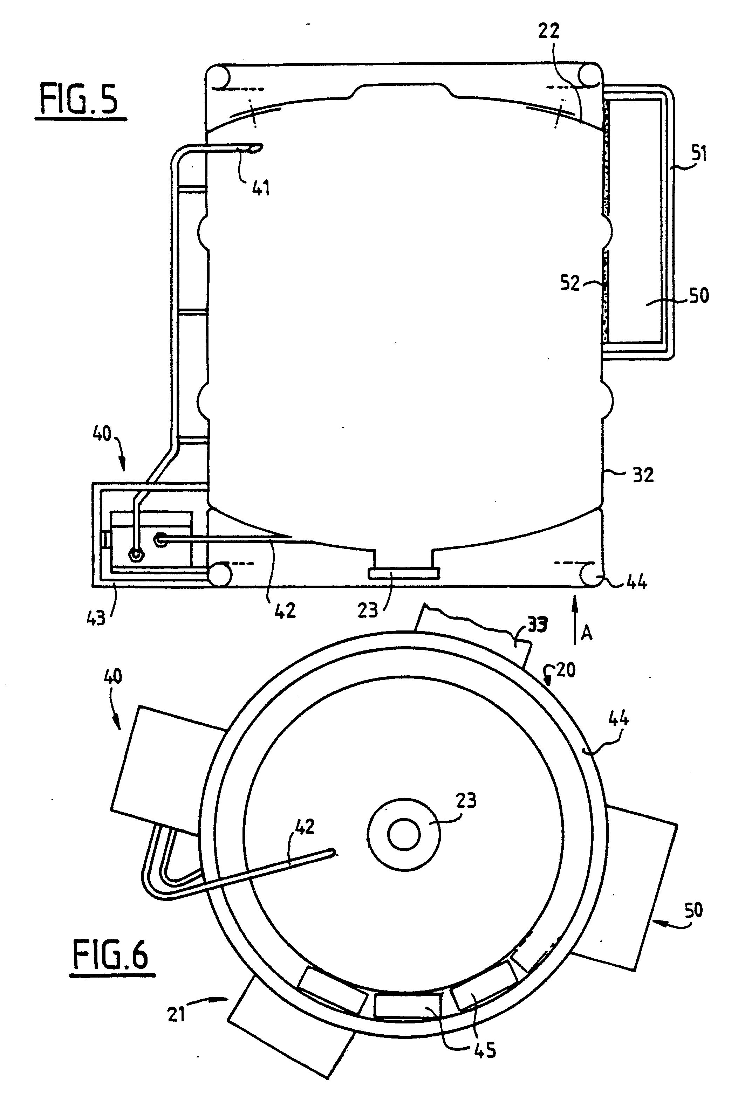

Pour l'alimentation en courant électrique des capteurs d'une part, de même que celle des moyens d'enregistrement et de mise en mémoire des valeurs mesurées, d'autre part, l'invention tire avantageusement partie du logement annulaire ménagé par la galerie 44 du fût 20 qui règne au niveau de la bonde 23 pour y loger quatre batteries d'accus, montées en série, peu encombrantes et de faible poids et qui sont reliées à la boîte de raccord électrique 33 à laquelle aboutissent les signaux recueillis par les sondes de mesure pour leur acheminement vers les moyens d'enregistrement et de mise en mémoire des valeurs des grandeurs mesurées. Lesdits moyens, 50, figures 5 et 6, également montés sur la paroi latérale 32 du fût comprennent un programme d'exploitation de chacun des canaux associés au capteur et sont enfermés dans un boîtier étanche, facile d'accès, protégé lui aussi à l'encontre des chocs par un cadre en tube métallique 51 et isolé thermiquement de la paroi du fût par une couche d'amiante 52, une telle protection thermique étant également prévue pour la partie électronique de tous les capteurs mis en oeuvre.

Afin de pouvoir controler l'état interne du fût 20, celui des capteurs et, le cas échéant, le bon fonctionnement du moyen d'acquisition et de transmission des données, le fond 22 du fût comporte une trappe d'accès 53 ménagée le plus simplement par une ouverture 54 du fond sur laquelle est rapportée une calotte 55 d'un autre fond d'un même fût, fixée sur sa périphérie à l'aide de boulons ou de goujons 56.

Un fût d'essai selon l'invention dont les équipements constitutifs sont placés de manière telle qu'ils ne gênent pas le passage du fût sur la ligne d'enfûtage permet alors de déterminer les caractéristiques fonctionnement de cette dernière lors de son passage sur la ligne, passage dont la fréquence est déterminée par le conducteur de ligne, par exemple journalier ou bi-hebdomadaire, pour des opérations de contrôle, mais plus fréquent si nécessaire pour les opérations de mise au point.

C'est de préférence par lecture à l'aide de machines simples comme des micro-ordinateurs que sont établies des courbes d'enregistrement des résultats de mesure ensuite comparées avec des courbes étalons préalablement établies, cette indication de mode opératoire n'étant toutefois donnée que pour illustrer le mode de fonctionnement du dispositif et du procédé de l'invention qui n'y est pas, bien entendu, limité.

## Revendications

1. Procédé pour la détermination des caractéristiques de fonctionnement d'une ligne d'enfûtage de bière, notamment celles de remplissage des fûts, mais aussi celles comme la température, la pression, le niveau de remplissage....etc, des fluides mis en oeuvre en chacun des différents postes de ladite ligne au droit desquels sont amenés successivement les fûts déplacés sur la ligne, caractérisé en ce que ces caractéristiques de fonctionnement des différents postes (A, B, C, D,....) de la ligne sont déterminées à partir de la mesure et de l'enregistrement des valeurs de certaines grandeurs régnant à l'intérieur des fûts au droit de chacun desdits postes et dont au moins certaines, comme la température de la paroi et celle régnant au niveau de la bonde, la pression intérieure au fût et le niveau de liquide à l'intérieur de celui-ci, sont mesurées et enregistrées à l'aide de capteurs et de moyens de mémoire associés à au moins un fût témoin (20) semblable à ceux destinés à être remplis de bière et qui se déplace sur la ligne d'enfûtage en même temps que lesdits autres fûts.

2. Dispositif pour la détermination des caractéristiques de fonctionnement d'une ligne d'enfûtage de bière, caractérisé en ce qu'il comprend au moins un fût témoin (20) identique à ceux circulant le long de la ligne pour être remplis de bière et qui est équipé de :

. capteurs (21, 30, 31, 40) de mesure de certaines grandeurs régnant à l'intérieur même du fût, comme la pression, la température de la paroi (32) et celle au niveau de la bonde (23) du fût, le niveau de remplissage en liquide,....etc ;

. de moyens (45) d'alimentation en courant électrique desdits capteurs ; et

. de moyens (50) d'enregistrement et de mise en mémoire des valeurs des grandeurs, lesquelles sont mesurées lors du passage du fût ainsi équipé au droit des différents postes de la ligne pour ensuite être lues sur des machines simples comme des micro-ordinateurs délivrant les résultats de mesure sous forme de courbes propres à être comparées à des courbes étalons préalablement établies.

3. Dispositif selon la revendication 2, caractérisé en ce que ledit fût témoin (20) est un fût unique muni d'un capteur (21) de pression à membrane pour la mesure de la pression régnant à l'intérieur du fût, d'un capteur de pression différentielle (40) pour la mesure du niveau de liquide à l'intérieur du fût et d'au moins une sonde (30, 31) de mesure de température.

4. Dispositif selon l'une quelconque des revendications 2 ou 3, caractérisé en ce que les moyens d'alimentation en courant électrique étant des accumulateurs (45) rechargeables, de petites dimensions, ceux-ci sont logés dans la galerie (44) du fût qui prolonge la paroi latérale (32) de celui-ci au niveau de la bonde (23).

5. Dispositif selon l'une quelconque des revendications 2 à 4, caractérisé en ce que le fond (22) du fût (20) est muni d'une trappe d'accés (53) pour permettre de contrôler l'état de l'intérieur du fût, des capteurs et le cas échéant, le bon fonctionnement des moyens d'acquisition de données et de transmission de celles-ci vers les moyens de mise en mémoire.

6. Dispositif selon l'une quelconque des revendications 2 à 5, caractérisé en ce qu'il comprend deux sondes de mesures de température, l'une (30) pour la mesure de la température de la paroi latérale (32) du fût et l'autre (31) pour la mesure de la température régnant au voisinage de la bonde (23), en ce que la prise de pression (42) placée au niveau de la bonde (23) du capteur de pression différentielle (40) est à orientation radiale, et en ce qu'à l'exception des accumulateurs (45) d'alimentation en courant électrique, l'ensemble des équipements associés aux capteurs et constitutifs des moyens d'enregistrement et de mise en mémoire (33, 40, 50, ...) sont disposés sur la paroi latérale (32) du fût en étant isolés thermiquement de cette dernière, d'une part, et protégés à l'encontre des chocs par des cadres en tube métallique (26, 43, 51,...), d'autre part.

FIG.1

A  B  C  D

FIG.2

**FIG.4**

**FIG.3**

FIG.5

41

22

51

52

50

40

32

43

42

23

44

A

33

20

40

44

23

42

50

FIG.6

21

45

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | VDI NACHRICHTEN. vol. 30, no. 39, 01 octobre 1976, DUSSELDORF DE pages 22 - 23; H.H. EMSCHERMANN ET AL.: "EIN MESSWERT-SPEICHERVERFAHREN" * le document en entier * | 1 | G01D21/02 B07C5/34 |
| Y | | 2-5 | |
| Y | WO-A-8500454 (IMPERIAL CHEMICAL INDUSTRIES PLC) * abrégé; figures 1-2 * | 2-5 | |
| A | WO-A-8604878 (THIELMANN-LUWA GMBH) * abrégé; figures 1-3 * | 2 | |
| A | DE-A-3318977 (SIEMENS AG) * abrégé; figures 1-3 * | 2-6 | |

**DOMAINES TECHNIQUES RECHERCHES (Int. Cl.5 )**

B07C
G01D

Le présent rapport a été établi pour toutes les revendications

| Lieu de la recherche | Date d'achèvement de la recherche | Examinateur |
|---|---|---|
| LA HAYE | 06 AOUT 1990 | LUT K. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0403)